# EUROPEAN PATENT SPECIFICATION

(11) **EP 2 431 122 B1**
(45) Date of publication and mention of the grant of the patent: **20.08.2014**
(21) Application number: 11168618.4
(22) Date of filing: 02.06.2011
(51) Int. Cl.: B23Q 3/154, H01F 13/00

(54) **Apparatus for control of electromagnetic chuck of multi channel type**
Vorrichtung zur Steuerung eines elektromagnetischen Futters vom Multikanaltyp
Appareil pour le contrôle d'un mandrin électromagnétique de type multicanal

(30) Priority: 16.09.2010 KR 20100090833
(43) Date of publication of application: 21.03.2012
(73) Proprietor: AEG Co., Ltd., Changnyeong-gun, Gyeongsangnam-Do Seoul 635-908 (KR)
(72) Inventor: Cho, Hyeonsu, 630-774 Seoul (KR)
(74) Representative: Vossius & Partner

(56) References cited:
- US-A- 3 571 911
- US-A- 3 579 053
- US-A- 4 633 361
- US-A- 5 267 119
- US-B1- 6 178 081

## Description

### BACKGROUND OF THE INVENTION

### Field of the Invention

The present invention relates to a permanent electromagnetic chuck, and more specifically, to a channel separation type magnetic chuck control device, in which the entire or only a part of the magnetic chuck is magnetized in order to efficiently process the work piece when clamping a work piece at a machine tool, and thus the work piece can be independently clamped for each channel to be suitable for the characteristics of the work piece such as the size and the like.

### Background of the Related Art

A conventional permanent electromagnetic chuck is a device for clamping a work piece to prevent movement of the work piece when processing the work piece using a machine tool. The magnetic chuck is magnetized by repeatedly supplying or blocking power of the magnetic chuck, and thus magnetization or demagnetization is performed on the work piece.

The conventional permanent electromagnetic chuck is fixed to the table of a machine tool, and the entire magnetic chuck is magnetized by supplying power only once regardless of the size of the permanent electromagnetic chuck in order to clamp the work piece.

However, in the permanent electromagnetic chuck according to a conventional technique, since magnetism is generated at the entire permanent electromagnetic chuck even when a work piece that is small compared to the size of the magnetic chuck is clamped, a lot of work pieces are magnetized at the empty permanent electromagnetic chuck when the small work piece is processed.

That is, if the work piece is in the form of a small chip, adjacent work pieces, as well as the work piece to be processed, are simultaneously magnetized at the magnetic chuck, and thus if the work piece is demagnetized in order to adjust the magnetization, all of the work pieces are demagnetized. Therefore, the position of the work piece should be re-set in order to prevent this phenomenon.

If the adjacent work pieces are simultaneously magnetized by the magnetic chuck when work pieces previously processed by a prior work exist together with a work piece waiting for being processed, it takes time to separate the work piece from the previously processed work pieces, and the previously processed work pieces should be moved to another positions. Therefore, there is a problem in that it is inconvenient and requires a large work space.

In addition, the permanent electromagnetic chuck according to the conventional technique cannot adjust strength of magnetic power. Although it is possible to adjust the strength of magnetic power, since the entire area of the magnetic chuck is magnetized with the same strength, it is difficult to process a variety of materials that should be clamped with different magnetic forces by clamping the materials only once.

US-6,778,081 discloses a device according to the preamble of claim 1.

### SUMMARY OF THE INVENTION

Accordingly, the present invention has been made in view of the above-mentioned problems occurring in the prior art, and it is an object of the present invention to provide a channel separation type magnetic chuck control device, in which the entire or only a part of the magnetic chuck that clamps a work piece at a machine tool is selectively magnetized, and thus the work piece can be independently clamped for each channel to be suitable for the characteristics of the work piece such as the size and the like, thereby efficiently processing the work piece.

To accomplish the above objects, according to an aspect of the present invention, there is provided a channel separation type magnetic chuck control device as defined in claim 1.

The control input unit includes: a channel selection unit for sensing a channel selected by a user and an on/off state of the corresponding channel and inputting the on/off state into the main control unit; an external PLC control unit for transferring a magnetic chuck control signal inputted from an external PLC control device to the main control unit; and a remote control unit for receiving a remote signal for controlling magnetization, demagnetization, and magnetizing strength of the magnetic chuck for each channel in a wired or wireless manner and outputting the remote control signal to the main control unit.

The channel separation type magnetic chuck control device according to the present invention is effective in that since the entire or a part of a magnetic chuck that clamps a work piece at a machine tool is selectively magnetized, and thus the work piece can be independently driven for each channel to be suitable for the characteristics of the work piece such as the size and the like, only the work piece desired to be processed can be clamped without giving affects to the other adjacent work pieces.

### BRIEF DESCRIPTION OF THE DRAWINGS

FIG. 1 is a block diagram showing the configuration of a main control unit of a two-channel separation type magnetic chuck control device according to an embodiment of the present invention.

FIG. 2 is a block diagram showing the configuration of a magnetic chuck driving unit of a two-channel separation type magnetic chuck control device according to an embodiment of the present invention.

### DETAILED DESCRIPTION OF THE PREFERRED EMBODIMENT

Hereinafter, the configuration and operation of a two-channel separation type magnetic chuck control device according to an embodiment of the present invention will be described in detail with reference to the attached drawings.

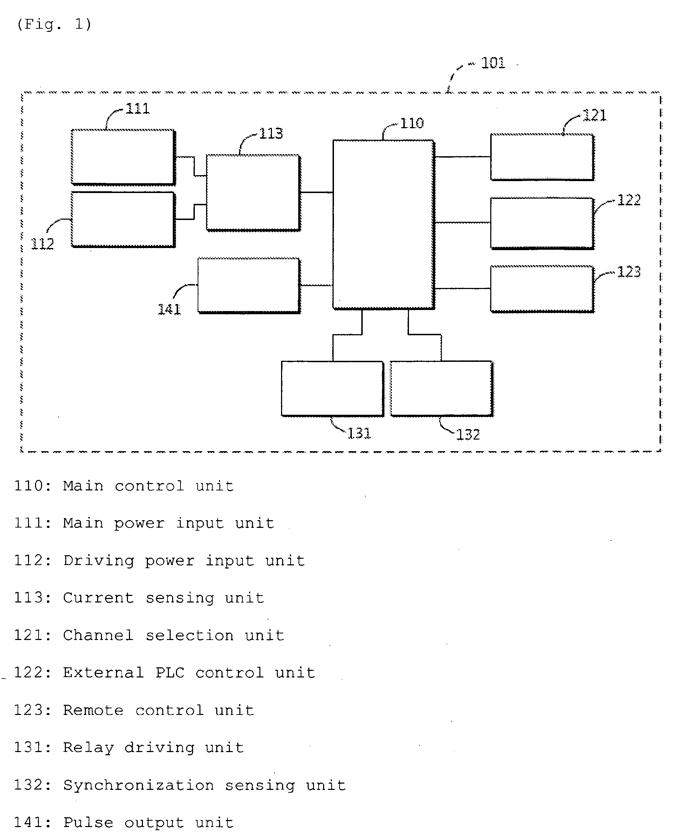

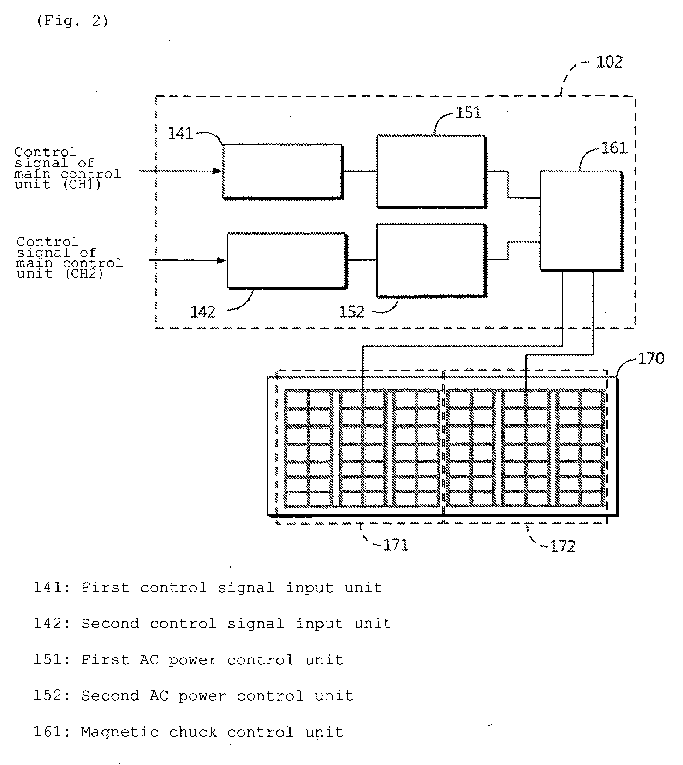

FIGs. 1 and 2 are block diagrams showing the entire configuration of a two-channel separation type magnetic chuck control device according to an embodiment of the present invention.

The two-channel separation type magnetic chuck control device comprises a magnetic chuck 170 including two channels 171 and 172 for clamping a work piece by magnetizing or demagnetizing the work piece in order to process the work piece, a magnetic chuck driving unit 102 for controlling supply of current in order to magnetize and demagnetize the work piece with selected magnetizing strength of the magnetic chuck 170, and a main control device 101 for outputting an on/off and magnetizing strength control signal for driving a magnetic chuck of a channel selected by a user to the magnetic chuck driving unit 102.

Here, the main control device 101 includes a main power input unit and a driving power input unit 111 and 112 for receiving AC power, a current sensing unit 113 for sensing input of main power and input of driving power for the magnetic chuck driving unit 102 of each channel from the main power input unit and the driving power input unit 111 and 112, a control input unit 121 to 123 for controlling selective magnetism and magnetizing strength of the magnetic chucks 171 and 172 for each channel, a main control unit 110 for outputting a driving signal for demagnetization, magnetization, and magnetizing strength of a magnetic chuck selected by a control signal inputted from the control input unit 121 to 123 and sensing whether or not the magnetic chuck is driven by a current value inputted through the current sensing unit 113, a pulse output unit 114 for outputting a driving pulse for adjusting magnetizing strength of the magnetic chuck selected by the magnetic chuck driving unit 102 under the control of the main control unit 110, a relay driving unit 131 for selectively driving magnetization or demagnetization of the magnetic chuck for each channel of the magnetic chuck driving unit 102 under the control of the main control unit 110, and a synchronization generation unit 132 for supplying a frequency synchronizing signal to the main control unit 110.

Here, the magnetic chuck driving unit 102 includes first and second control signal input units 141 and 142 for inputting a magnetic chuck control signal into each channel from the main control device 101, first and second AC power control units 151 and 152 for controlling AC powers respectively inputted by the magnetic chuck control signals inputted through the first and second control signal input units 141 and 142, and a magnetic chuck control unit 161 for controlling magnetization, demagnetization, and magnetizing strength by supplying current signals outputted through the first and second AC power control units 151 and 152 to the magnetic chuck 170 of a corresponding channel.

Here, the control input unit 121 to 123 includes a channel selection unit 121 for sensing a channel selected by a user and an on/off state of the corresponding channel and inputting the on/off state into the main control unit 110, an external PLC control unit 122 for transferring a magnetic chuck control signal inputted from an external PLC control device to the main control unit 110, and a remote control unit 123 for receiving a remote signal for controlling magnetization, demagnetization, and magnetizing strength of the magnetic chucks 171 and 172 for each channel in a wired or wireless manner and outputting the remote control signal to the main control unit 110.

The operation of the present invention configured as such will be described in further detail with reference to FIGS. 1 and 2.

When clamping and processing a work piece, the magnetic chucks 171 and 172 separated for each channel are driven for a corresponding channel at a selected magnetizing strength depending on the selection of the user.

That is, for the channel selection and strength control of the magnetic chuck, the main control unit 110 senses a signal inputted through the channel selection unit 121, the external PLC control unit 122, or the remote control unit 123 and generates a signal for driving the magnetic chuck 171 and 172 of a corresponding channel.

The magnetic strength at the time of the magnetization inputted through the remote control unit 123 is divided into 5 levels as shown in Table 1 and set to drive the magnetic chuck at 50 to 100% of the magnetizing strength in each level.

**[Table 1]**

| Level | 1 | 2 | 3 | 4 | 5 |
|---|---|---|---|---|---|
| Magnetizing strength | 50% | 75% | 85% | 95% | 100% |

The magnetizing strength cannot be adjusted if the magnetization state and the magnetic chuck 171 and 172 of each channel are simultaneously turned off, and the magnetizing strength can be adjusted only when the magnetic chuck is in a demagnetization state.

After the magnetization is completed, the magnetizing strength is set not to be adjusted so that the clamped work piece cannot get out of its position by the change of the magnetic strength.

As described above, the main control unit 110 senses the control signal for controlling the magnetic chuck 171 and 172 of a corresponding channel selected through the control input unit 121 to 123 and drives the magnetic chuck 171 and 172 of a corresponding channel by driving the relay driving unit 131.

In addition, the main control unit 110 outputs the magnetizing strength of the magnetic chuck 171 and 172 of each channel through the pulse output unit 141 as shown in Table 1.

The pulse output unit 141 supplies a pulse for driving a triac for controlling current at the AC power control units 151 and 152 of the magnetic chuck driving unit 102.

That is, the magnetic chuck driving unit 102 receives the magnetic chuck control signal of a corresponding channel inputted through the first and second control signal input units 141 and 142 and drives a corresponding triac of respective AC power control units 151 and 152 using current corresponding to the set magnetizing strength. Based on the current value controlled and outputted from the AC power control units 151 and 152, the magnetic chuck control unit 161 controls the inputted power to drive the magnetic chuck 171 and 172 of a corresponding channel with the set magnetizing strength.

As the magnetic chuck 171 and 172 of a corresponding channel starts to be driven, each work piece set to a corresponding position is clamped and processed.

After each work piece has been processed, the work piece magnetized at the magnetic chuck 171 and 172 of a corresponding channel is demagnetized. At this point, if the user selects demagnetization using the control input unit 121 to 123, the demagnetization is accomplished regardless of the magnetized level.

The channel separation type magnetic chuck control device according to the present invention described above is not limited to the embodiments, but can be modified in a variety of ways depending on the number of channels and magnetizing strength of the magnetic chuck, and magnetic chuck control means of the control input unit can be diversely modified.

### DESCRIPTION OF SYMBOLS

101: Main control device
102: Magnetic chuck driving unit
111: Main power input unit
112: Driving power input unit
113: Current sensing unit
121: Channel selection unit
122: External PLC control unit
123: Remote control unit
131: Relay driving unit
132: Synchronization sensing unit
141, 142: First and second control signal input units
151, 152: First and second AC power control units
161: Magnetic chuck control unit
170: Magnetic chuck
171, 172: First and second magnetic chucks

## Claims

1. A channel separation type magnetic chuck control device comprising a main control device (101) for receiving AC power through a main power input unit (111) and controlling drive of a magnetic chuck (170) and a magnetic chuck driving unit (102) for driving magnetization of the magnetic chuck (170) that is separated and independently driven as a plurality of channels (171, 172) under a control of the main control device (101), wherein the main control device (101) comprises:
a control input unit for controlling selective magnetism and magnetizing strength of the magnetic chuck (170) for each channel (171, 172);
a pulse output unit (141) for outputting a driving pulse for adjusting magnetizing strength of the magnetic chuck (170) selected by the magnetic chuck driving unit (102) under the control of the main control unit (110); and
a synchronization generation unit for supplying a frequency synchronizing signal to the main control unit (110); and
the magnetic chuck driving unit (102) comprises:
a magnetic chuck control unit (161) for controlling magnetization, demagnetization, and magnetizing strength by supplying a current signal outputted through the AC power control unit (151, 152) to the magnetic chuck (170) of a corresponding channel (171, 172); **characterized by**:
the main control device (101) further comprises:
a current sensing unit (113) for sensing input of main power from the main power input unit (111) and input of driving power for the magnetic chuck driving unit (102) of each separated channel (171, 172);
a main control unit (110) for outputting a driving signal for demagnetization, magnetization, and magnetizing strength of a magnetic chuck (170) selected by a control signal inputted from the control input unit and sensing whether or not the magnetic chuck (170) is driven by a current value inputted through the current sensing unit (113);and
a relay driving unit (131) for selectively driving magnetization or demagnetization of the magnetic chuck (170) for each channel of the magnetic chuck driving unit (102) under the control of the main control unit (110); and
the magnetic chuck driving unit (102) further comprises:
a control signal input unit (141, 142) for inputting a magnetic chuck control signal into each channel (171, 172) from the main control device (101); and
an AC power control unit (151, 152) for controlling AC power inputted by the magnetic chuck control signal inputted through the control signal input unit (141, 142).

2. The device according to claim 1, wherein the control input unit includes:
a channel selection unit (121) for sensing a channel selected by a user and an on/off state of the corresponding channel and inputting the on/off state into the main control unit (110) ;
an external PLC control unit (122) for transferring a magnetic chuck control signal inputted from an external PLC control device to the main control unit (110); and
a remote control unit (123) for receiving a remote signal for controlling magnetization, demagnetization, and magnetizing strength of the magnetic chuck (170) for each channel (171, 172) in a wired or wireless manner and outputting the remote control signal to the main control unit (110).

3. The device according to claim 1, wherein the AC power control unit (151, 152) includes a triac for controlling current inputted by the pulse signal inputted from the main control device (101).

4. The device according to claim 1, wherein the magnetic chuck (170) can be turned on or off for each channel (171, 172), and each channel (171, 172) is magnetized with a strength different from those of the other channels.

## Patentansprüche

1. Magnetfutter-Steuervorrichtung vom Kanaltrenntyp mit einer Hauptsteuervorrichtung (101) zum Empfangen von Wechselstrom von einer Hauptstromeingabeeinheit (111) und Steuern des Antriebs eines Magnetfutters (170) und einer Magnetfutter-Antriebseinheit (102) zum Antreiben der Magnetisierung des Magnetfutters (170), das gesteuert von der Hauptsteuervorrichtung (101) getrennt und unabhängig als eine Vielzahl von Kanälen (171, 172) angetrieben wird, wobei die Hauptsteuervorrichtung (101) aufweist:
eine Steuereingabevorrichtung zum Steuern des selektiven Magnetismus und der Magnetisierungsstärke des Magnetfutters (170) für jeden Kanal (171, 172),
eine Impulsausgabeeinheit (141) zum Ausgeben eines Antriebsimpulses zur Einstellung der Magnetfeldstärke des durch die Magnetfutter-Antriebseinheit (102) ausgewählten Magnetfutters (170) gesteuert durch die Hauptsteuereinheit (110) und
eine Synchronisierungseinheit zum Zuführen eines Frequenzsynchronisierungssignals an die Hauptsteuereinheit (110) und
wobei die Magnetfutter-Antriebseinheit (102) aufweist:
eine Magnetfutter-Steuereinheit (161) zum Steuern der Magnetisierung, der Entmagnetisierung und der Magnetfeldstärke durch Zuführen eines durch die Wechselstrom-Steuereinheit (151, 152) ausgegebenen Stromsignals an das Magnetfutter (170) eines entsprechenden Kanals (171, 172), **dadurch gekennzeichnet, dass**:
die Hauptsteuervorrichtung (101) ferner aufweist:
eine Stromabtasteinheit (113) zum Abtasten von von der Hauptstromeingabeeinheit (111) zugeführtem Hauptstrom und von von der Magnetfutter-Antriebseinheit (102) jedes getrennten Kanals (171, 172) zugeführter Antriebsenergie,
eine Hauptsteuereinheit (110) zum Ausgeben eines Antriebssignals für die Entmagnetisierung, Magnetisierung und Magnetfeldstärke des Magnetfutters (170) ausgewählt durch ein von der Steuereingabeeinheit eingegebenes Steuersignal und zum Abtasten, ob das Magnetfutter (170) durch einen durch die Stromabtasteinheit (113) eingegebenen Stromwert angetrieben wird oder nicht, und
eine Relaisantriebseinheit (131) zum selektiven Antrieb der Magnetisierung und Entmagnetisierung des Magnetfutters (170) für jeden Kanal der Magnetfutter-Antriebseinheit (102) gesteuert durch die Hauptsteuereinheit (110) und
wobei die Magnetfutter-Antriebseinheit (102) ferner aufweist:
eine Steuersignal-Eingabeeinheit (141, 142) zum Eingeben eines Magnetfutter-Steuersignals von der Hauptsteuervorrichtung (101) in jeden Kanal (171, 172) und
eine Wechselstrom-Steuereinheit (151, 152) zum Steuern von Wechselstrom, der von einem von der Steuersignal-Eingabeeinheit (141, 142) eingegebenen Magnetfutter-Steuersignal zugeführt wird.

2. Vorrichtung nach Anspruch 1, wobei die Steuereingabeeinheit aufweist:
eine Kanalauswahleinrichtung (121) zum Abtasten des von einem Benutzer ausgewählten Kanals und eines Ein-/Aus-Zustands des entsprechenden Kanals und Eingabe des Ein-/Aus-Zustands in die Hauptsteuereinheit (110),
eine externe PLC-Steuereinheit (122) zum Übermitteln eines von einer externen PLC-Steuervorrichtung eingegebenen Magnetfutter-Steuersignals an die Hauptsteuereinheit (110) und
eine Fernsteuereinheit (123) zum Empfangen eines Fernsteuersignals zur drahtgebundenen und drahtlosen Steuerung der Magnetisierung, Entmagnetisierung und Magnetfeldstärke des Magnetfutters (170) für jeden Kanal (171, 172) und Ausgeben des Fernsteuersignals an die Hauptsteuereinheit (110).

3. Vorrichtung nach Anspruch 1, wobei die Wechselstrom-Steuereinheit (151, 152) einen Zweiwegthyristor zur Steuerung von durch das von der Hauptsteuervorrichtung (101) eingegebenen Impulssignals eingegebenem Strom.

4. Vorrichtung nach Anspruch 1, wobei das Magnetfutter (170) für jeden Kanal (171, 172) an- oder abgeschaltet werden kann und jeder Kanal (171, 172) mit einer Stärke magnetisiert ist, die sich von der der anderen Kanäle unterscheidet.

## Revendications

1. Dispositif de commande d'un mandrin magnétique de type à séparation de canaux, comprenant un dispositif de commande principal (101) pour la réception d'un courant AC par l'intermédiaire d'une unité d'entrée de courant principale (111) et pour la commande d'entraînement d'un mandrin magnétique (170), et une unité d'entraînement (102) de mandrin magnétique pour entraîner la magnétisation du mandrin magnétique (170), lequel est séparé et entraîné de manière indépendante en tant que pluralité de canaux (171, 172) sous la commande du dispositif de commande principal (101), ledit dispositif de commande principal (101) comportant :
une unité d'entrée de commande pour commander le magnétisme sélectif et la force de magnétisation du mandrin magnétique (170) pour chaque canal (171, 172) ;
une unité de sortie d'impulsions (141) pour l'émission d'une impulsion d'entraînement pour le réglage de la force de magnétisation du mandrin magnétique (170) sélectionnée par l'unité d'entraînement (102) de mandrin magnétique sous la commande de l'unité de commande principale (110) ; et
une unité de génération de synchronisation pour l'émission d'un signal de synchronisation de fréquence vers l'unité de commande principale (110) ; et où
l'unité d'entraînement (102) de mandrin magnétique comporte :
une unité de commande (161) de mandrin magnétique pour la commande de magnétisation, de démagnétisation et de force de magnétisation par transmission d'un signal de courant émis par l'unité de commande de courant AC (151, 152) vers le mandrin magnétique (170) d'un canal (171, 172) correspondant ; **caractérisé en ce que** :
le dispositif de commande principal (101) comprend en outre :
une unité de détection de courant (113) pour la détection d'une entrée de courant principal provenant de l'unité d'entrée de courant principale (111) et une entrée de courant d'entraînement pour l'unité d'entraînement (102) de mandrin magnétique de chaque canal séparé (171, 172) ;
une unité de commande principale (110) pour la sortie d'un signal d'entraînement de démagnétisation, de magnétisation, et de force de magnétisation d'un mandrin magnétique (170) sélectionnée par un signal de commande émis par l'unité d'entrée de commande, et la détection si le mandrin magnétique (170) est entraîné par une valeur de courant entrée par l'intermédiaire de l'unité de détection de courant (113) ; et
une unité d'entraînement de relais (131) pour l'entraînement sélectif de la magnétisation ou de la démagnétisation du mandrin magnétique (170) pour chaque canal (171, 172) de l'unité d'entraînement (102) de mandrin magnétique sous la commande de l'unité de commande principale (110) ; et
**en ce que** l'unité d'entraînement (102) de mandrin magnétique comprend en outre :
une unité d'entrée de signal de commande (141, 142) pour l'entrée dans chaque canal (171, 172) d'un signal de commande de mandrin magnétique provenant du dispositif de commande principal (101) ; et
une unité de commande de courant AC (151, 152) pour la commande de courant AC alimenté par le signal de commande de mandrin magnétique entré par l'intermédiaire de l'unité d'entrée de signal de commande (141, 142).

2. Dispositif selon la revendication 1, où l'unité d'entrée de commande comporte :
une unité de sélection (121) de canal pour la détection d'un canal sélectionné par un utilisateur et d'un état on/off du canal correspondant, et la saisie de l'état on/off dans l'unité de commande principale (110) ;
une unité de commande PLC externe (122) pour la transmission d'un signal de commande de mandrin magnétique provenant d'un dispositif de commande PLC externe à l'unité de commande principale (110) ; et
une unité de commande à distance (123) pour la transmission avec ou sans fil d'un signal à distance commandant la magnétisation, la démagnétisation et la force de magnétisation du mandrin magnétique (170) pour chaque canal (171, 172), et l'émission du signal de commande à distance vers l'unité de commande principale (110).

3. Dispositif selon la revendication 1, où l'unité de commande de courant AC (151, 152) comporte une sortie TRIAC pour la commande de courant alimenté par le signal d'impulsion provenant du dispositif de commande principal (101).

4. Dispositif selon la revendication 1, où le mandrin magnétique (170) peut être active ou désactivé pour chaque canal (171, 172), et où chaque canal (171, 172) est magnétisé avec une force différente de celle des autres canaux.
